# EUROPÄISCHE PATENTANMELDUNG

(11) **EP 1 496 383 A1**
(43) Veröffentlichungstag der Anmeldung: **12.01.2005**
(21) Anmeldenummer: 04015827.1
(22) Anmeldetag: 06.07.2004
(51) Int. Cl.: G02B 21/00, G02B 21/06

(54) **Anordnung zur Direkteinkopplung eines Lasers, vorzugsweise eines Kurzpulslasers**

(30) Priorität: 11.07.2003 DE 10332074
(71) Anmelder: CARL ZEISS JENA GmbH, 07745 Jena (DE)
(72) Erfinder: Lange, Ralph, 07743 Jena (DE); Wilhelm, Stefan, 07745 Jena (DE); Gerstner, Volker, 07743 Jena (DE); Scheler, Roland, 07747 Jena (DE); Goelles, Michael, 07745 Jena (DE); Funk, Jörg-Michael, 07743 Jena (DE)

(57) **Zusammenfassung**

Anordnung zur Direkteinkopplung eines Lasers, vorzugsweise eines Kurzpulslasers zur nichtlinearen Probenanregung, der sich außerhab des Mikroskopgehäuses befindet, in den Strahlengang eines Laser- Scanning - Mikroskopes (LSM), bestehend aus einem Gehäuse, in den ein Justierlaser integriert ist, der über Strahlteiler in den Mikroskopstrahlengang einkoppelbar ist, wobei das Gehäuse vorteilhaft in den Scanmodul des LSM einsetzbar integriert ist und ein Strahlteiler für den Direktkoppellaser in Richtung des Objektives eine hohe Transmission aufweist und weiterhin eine teilweise Transmission für von der Probe kommende Rückreflexe des Justierlasers zur Einstellung der Überdeckung von Justierlaser und Direktkoppellaser.

## Beschreibung

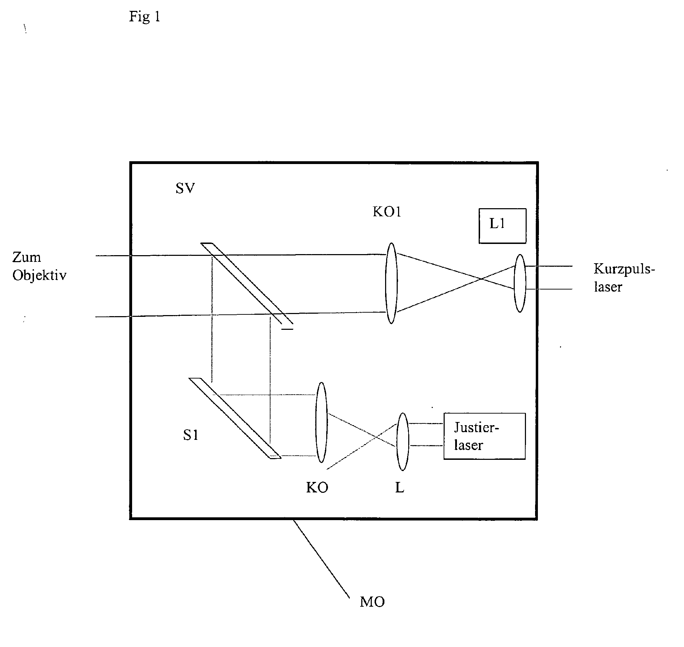

In Fig.1 ist ein erfindungsgemäßes Einkoppelmodul für die Freistrahlkopplung eines Lasers insbesondere eines NIR-Kurzpulslasers dargestellt, der sich außerhalb des Mikroskopgehäuses befindet.

Das Modul bildet eine vorteilhaft eine einschiebbare mechanische Einheit MO, die eine Serviceschnittstelle am Laser-Scanning-Mikroskop darstellen kann, in der ein Justierlaser JL integriert ist, der vorteilhaft eine Wellenlänge im sichtbaren Bereich aufweist.

Dieser wird über Einkoppellinse L, feststehenden Kollimator KO, Umlenkspiegel S1 und Strahlvereiniger SV in den Mikroskopstrahlengang eingekoppelt.

Über eine justierbare Direktkoppellinse L1 erfolgt die Einkopplung des Direktkoppellasers.

Zunächst wird aber der Einkoppelmodul vorjustiert, beispielsweise mittels eines externen Lasers an der Stelle des Direktkoppellasers, mit dem die verstellbare Kollimatorlinse KO1 vorjustiert wird, beispielsweise mit einem Autokollimationsfernrohr .

Anschließend werden der interne Justierlaser, der Spiegel S1 und der Strahlvereiniger S2 sowie der Kollimator KO1 zueinander justiert, so daß der Strahl des Justierlasers kollinear mit der optischen Achse der Einheit MO ist.

Dies kann erfolgen, indem der Justierlaser in zwei Richtungen verkippbar ist oder beispielsweise der Umlenkspiegel S1.

Das Modul wird spätestens jetzt in das Mikroskopgehäuse eingesetzt.

Die nachfolgenden Elemente des Beleuchtungsmoduls des Mikroskopes wie Teleskop, Scanner, Scanobjektiv können nun auf den Strahl des Justierlasers aufgefädelt werden.

Der Direktkoppellaser, der z.B. im nahen IR Bereich arbeitet und schwach auf der Probe oder einem Justierspiegel sichtbar ist, wird anschließend direkt eingekoppelt und zum Justierlaser ausgerichtet, indem die Strahlen in Überdeckung gebracht werden.

Unter das Objektiv wird hierzu vorteilhaft ein Spiegel gelegt und der Rückreflex des Justierlasers gelangt durch den Strahlvereiniger S2.

Der Strahlvereiniger weist hierzu vorteilhaft eine volle Transmission bezüglich des Kurzpulslasers und eine vorzugsweise 50 %-ige Teildurchlässigkeit für den Justierlaser auf.

Hierdurch wird ermöglicht, den Strahl des Justierlasers kolinear mit dem Strahl des Direktkoppellasers in Richtung des Objektives zu überlagern und andererseits einen Teil des in der Probenebene reflektierten Justierlasers über den Direktkoppelport auszukoppeln. Der Justierlaser wird außerhalb des Mikroskopgehäuses kolinear mit Direktkoppellaser überlagert. Dieser wird über mehrere Freiheitsgrade, beispielsweise verkippbare Umlenkspiegel, ausgerichtet, indem die aus unterschiedlichen Richtungen kommenden Strahlen an einem oder mehreren Beobachtungspunkten vor der Direkteinkopplung, beispielsweise mittels einer Streuscheibe, auf Überlappung geprüft und ausgerichtet werden.

Bezüglich einer Gesamtdarstellung eines LSM Strahlengangs wird auf DE 197 02 753 A1 verwiesen.

Der einschiebbare Modul gemäß der Erfindung würde sich im Scanmodul S in Fig.1 befinden und der Direktkoppellaser direkt von außen eingekoppelt werden.

## Patentansprüche

1. Anordnung zur Direkteinkopplung eines Lasers, vorzugsweise eines Kurzpulslasers zur nichtlinearen Probenanregung, der sich außerhalb des Mikroskopgehäuses befindet, in den Strahlengang eines Laser-Scanning-Mikroskopes (LSM), bestehend aus einem Gehäuse, in den ein Justierlaser integriert ist, der über Strahlteiler in den Mikroskopstrahlengang einkoppelbar ist.

2. Anordnung nach Anspruch 1, wobei das Gehäuse in den Scanmodul des LSM einsetzbar integriert ist.

3. Anordnung nach einem der Ansprüche 1 oder 2,
wobei ein Strahlteiler für den Direktkoppellaser in Richtung des Objektives eine hohe Transmission aufweist und eine weiterhin eine teilweise Transmission für von der Probe kommende Rückreflexe des Justierlasers zur Einstellung der Überdeckung von Justierlaser und Direktkoppellaser .

4. Anordnung nach einem der Ansprüche 1-3,
wobei eine Direktkoppellinse für den Direktkoppellaser im Gehäuse vorgesehen ist.

5. Anordnung nach einem der Ansprüche 1-4,
wobei eine justierbare Einkoppeloptik für den Direktkoppellaser im Gehäuse vorgesehen ist.
